(19) Europäisches Patentamt / European Patent Office / Office européen des brevets

(11) **EP 3 035 576 A1**

(12) # EUROPEAN PATENT APPLICATION

(43) Date of publication:
**22.06.2016 Bulletin 2016/25**

(51) Int Cl.:
**H04L 1/00** (2006.01)

(21) Application number: **14199131.5**

(22) Date of filing: **19.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Koninklijke KPN N.V.
2516 CK The Hague (NL)**
• **University of Twente
7500 AE Enschede (NL)**

(72) Inventor: **Goseling, Jasper
7512 DV Enschede (NL)**

(74) Representative: **Wuyts, Koenraad Maria
Koninklijke KPN N.V.
Intellectual Property Group
P.O. Box 95321
2509 CH Den Haag (NL)**

(54) **Method for processing and signalling coding coefficients of network coded data packets**

(57) The disclosure relates to a method for processing one or more network coded data packets in a receiving system, wherein the receiving system has access to a matrix comprising linearly independent sequences of coding coefficients applicable to the one or more network coded data packets. A matrix indicator of the matrix is applied (e.g. received over a communication link), wherein the indicator indicates the applicable sequence of coding coefficients in the matrix for processing a network coded data packet. The network coded data packet is processed using the matrix indicator. The disclosure also relates to a method of signalling the matrix indicator from a transmission system.

FIG. 3

EP 3 035 576 A1

## Description

FIELD OF THE INVENTION

The invention relates to a method and system for processing network coded data packets. More specifically, the invention relates to signalling of the coding coefficients of network coded data packets.

BACKGROUND

Recent developments in 3GPP standardization relate to Long Term Evolution (LTE) and Long Term Evolution Advanced (LTE Advanced) telecommunications networks and devices. LTE and LTE Advanced, also known as the 4G (i.e. fourth generation) mobile communications standard, is a standard for wireless communication of high-speed data for mobile phones and data terminals. It is a successor of GSM/EDGE (also known as 2G or 2.5G) and UMTS/HSPA (also known as 3G) network technologies, increasing the capacity and speed using a different radio interface together with evolutions and improvements in the radio access network and the core network.

One approach to further improve the performance of telecommunications networks involves the use of network coding. Network coding may improve efficiency in the telecommunications network, e.g. regarding communication of the radio path and/or signalling in the network.

Network coding comprises making a linear combination of (at least the payload of) two or more data packets (e.g. via a bit-wise XOR operation of the two or more data packets), resulting in a network coded data packet. A single network-coded data packet thus represents a single linear combination of the two or more data packets. Note that different linear combinations, and thus different network coded data packets, may be made from a same set of two or more data packets. Also, a linear combination of the two or more data packets of a given (same) size may result in a network-coded data packet of that given size.

In general, a network coded packet C can be expressed as a linear combination of data packets P:

$$C_n = a_{n1}P_1 + a_{n2}P_2 + a_{n3}P_{3\,+\,...}$$

The numbers $a_{n1}$, $a_{n2}$, in the above expression are called coding coefficients. Preferably, at least two of the coding coefficients are non-zero.

Overhead information (e.g. overhead bits) may additionally be included to signal the linear combination made in producing the network coded data packet in order to enable a receiving entity to decode the network coded data packet.

In order to further improve the efficiency of resource use the overhead information may be reduced.

SUMMARY

The present disclosure aims to reduce overhead information for communication systems applying network coding.

To that end, in one aspect, the present disclosure pertains to a method for processing one or more network coded data packets in a receiving system, wherein the receiving system has access to a matrix comprising linearly independent sequences of coding coefficients applicable to the one or more network coded data packets. In one embodiment, the matrix is stored in the receiving system (e.g. by pre-programming the matrix or by a (single) transmission of the matrix to the receiving system over the communication link for a session between the transmission system and the receiving system).

The receiving system applies a matrix indicator. The matrix indicator indicates the sequence of applicable coding coefficients, i.e. a sequence of such coding coefficients linearly independent from another sequence of coding coefficients in the matrix, for processing the network coded data packet.

In one embodiment, the matrix indicator is received over a communication link. The communication link may comprise a wired or wireless communications path. In one embodiment, the transmission system comprises a base station (e.g. a NodeB, an eNodeB, a WiFi access point) communicating over a wireless interface with a receiving system (e.g. a mobile user device, such as a smart phone, a tablet computer etc.).

The matrix indicator may also be defined in advance for a receiving system, i.e. the matrix indicator for a particular network coded data packet is implicitly known by the receiving system. In one embodiment, the transmission system may apply coding coefficients from predefined sequences in the matrix for generating network coded data packets for a particular receiving system (identified by e.g. a UE identifier). Since the sequences are predefined, the matrix indicator may be known by the receiving system so that the matrix indicator needs not be signalled explicitly.

The receiving system processes the network coded data packet using the matrix indicator to identify the applicable coding coefficients. Processing the at least one network coded data packet may include at least one of analysing the usefulness of the network coded data packet and the decoding of the one or more network coded data packet. A single network coded data packet may be decoded if sufficient original data packets are available as will be explained in more detail below. Both processing steps are assisted by the receipt of the matrix indicator as will be clarified below.

Another aspect of the disclosure involves a method for signalling coding coefficients of a network coded data packet from a transmission system to a receiving system over a communication link. The coding coefficients have been selected from a matrix comprising linearly independent sequences of coding coefficients. The method comprises transmitting a matrix indicator of the matrix over the communication link. The matrix indicator indicates the sequence of applicable coding coefficients in the matrix, i.e. a sequence of coding coefficients that is linearly independent from another sequence in the matrix, for processing the network coded data packet in the receiving system.

In one embodiment, the method involves generating a network coded data packet using coding coefficients of a sequence of coding coefficients from the matrix. The matrix indicator is indicative of the sequence used for network coding.

Other aspects of the disclosure pertain to a computer program or suite of computer programs, a carrier (e.g. a non-transitory carrier) thereof, a receiving system and a transmission system. Examples of a receiving system include a user device (e.g. a smart phone; a tablet computer), a wireless access node (e.g. a base station, an eNodeB) and a gateway.

The disclosed aspects facilitate reduction of the transmitted overhead information by applying a matrix indicator (e.g. an indicator of a row in the matrix) indicating a sequence of coding coefficients for a network coded data packet instead of transmitting and processing the full sequence of coding coefficients for each network coded data packet. The matrix indicator may be signalled to and received by the receiving system.

It should be appreciated that the receiving system may have access to more than one matrix, e.g. matrices of different size. In that case, the receiving system should be aware or be made aware of the matrix to which the matrix indicator refers.

The matrix or matrices generally contain at least two sequences of coding coefficients. The coding coefficients in the matrix are non-random. The minimum number of rows and the number of columns may be at least as large as the maximum number of data packets that is in a network coded data packets.

It should also be appreciated that the matrix indicator may e.g. refer to an indicator indicating a row in the matrix (e.g. row number) or an indicator indicating a column in the matrix (e.g. a column number). It should be noted that rows and columns of coding coefficients in one matrix constitute columns and rows of coding coefficients in the transposed matrix, which may also be available in or computed by the receiving system.

In one embodiment, a first matrix indicator is received for a first network coded data packet and a second matrix indicator is received for a second network coded data packet. One of the network coded data packets may be discarded when it is detected from a comparison of the two matrix indicators that these matrix indicators are identical, i.e. the sequences of coding coefficients are identical. In other words, redundant network coded data packets can easily be detected on the basis of the matrix indicator. Only network coded data packets formed using linearly independent sequences of coding coefficients contribute to resolving original data packets from a set of network coded data packets.

In one embodiment, the processing comprises decoding of the at least one network coded data packet applying coding coefficients indicated by the received matrix indicator. In this embodiment, the matrix indicator is used to identify the applicable coding coefficients when decoding of the network coded data packet is performed.

In one embodiment, the matrix indicator is included in the network coded data packet received by the receiving system. The matrix indicator may e.g. be comprised in the header of the network coded data packet.

In one embodiment, the matrix comprises at least one sub-matrix of coding coefficients, wherein the at least one sub-matrix has linearly independent sequences of coding coefficients. Such a sub-matrix is also referred to as being full rank.

The matrix and/or sub-matrix may be a square matrix.

Preferably any sub-matrix in the matrix consists of linearly independent sequences of coding coefficients.

An example of a useful matrix is a Cauchy matrix. Cauchy matrices have the additional property that they can be described with only a small number of parameters. Accordingly, such a matrix can be transmitted using a limited amount of data or requiring limited storage resources.

Other matrices comprising sub-matrices of coding coefficients having linearly independent sequences are e.g. described by Lacan and Fimes in "A Construction of Matrices With No Singular Square Submatrices" in Lecture Notes in Computer Science Volume 2948, 2004, pp 145-147.

The embodiment comprising one or more sub-matrices as defined above facilitates processing sets of network coded data packets of different size with the same matrix of coding coefficients. Sets of network coded data packets may differ in size for various reasons. For example, network coded data packets may be formed for a set of data packets to be transmitted. The number of data packets involved in network coding may differ from set to set. The number of data packets in a set involved in network coding may also change during processing of that set. In one embodiment, a receiving system may indicate to a transmission system that a particular data packet has been received or resolved and, subsequently, the corresponding data packet needs no longer be included in the set of data packets used for network coding. In that case the size of the set itself changes during network coding.

In one embodiment, the matrix indicator contains a sequence length indicator. The sequence length indicator indicates the number of coding coefficients to be used starting from a start position in the matrix in e.g. the row indicated by the matrix indicator. For example, the matrix indicator may indicate that five coding coefficients should be used in row s, starting from the first position of the row. In this manner, portions of a larger matrix of coding coefficients can be signalled explicitly to the receiving system. It should be noted that the start position may be implicit, e.g. known in advance, such that the start position should not be signalled explicitly in all circumstances.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fiber, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

BRIEF DESCRIPTION OF THE DRAWINGS

Aspects of the invention will be explained in greater detail by reference to exemplary embodiments shown in the drawings, in which:

FIG. 1 shows a schematic illustration of a telecommunications system;
FIGS. 2A-2C illustrate various applications of network coding in a telecommunications network according to FIG. 1;
FIG. 3 is a schematic illustration of a system for signalling coding coefficients of network coded data packets in an efficient manner according to a disclosed embodiment;
FIGS. 4A and 4B illustrate steps of signalling methods for a transmission system and a receiving system according to disclosed embodiments
FIG. 5 is a schematic illustration of a full rank matrix applied for signalling coding coefficients; and
FIG. 6 is a schematic block diagram of a general system (e.g. a transmission system or a receiving system).

DETAILED DESCRIPTION OF THE DRAWINGS

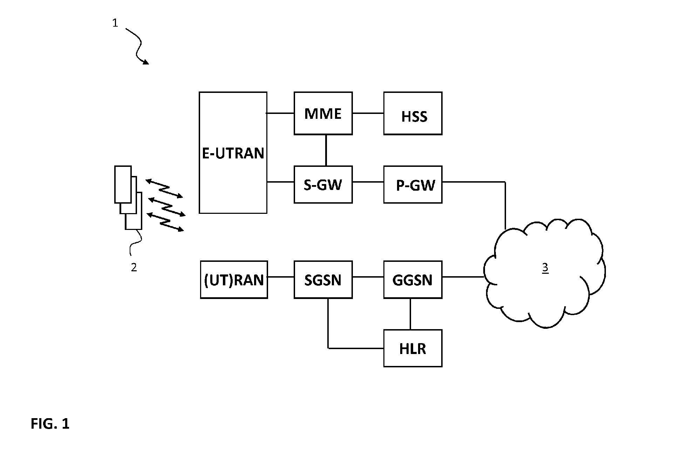

FIG. 1 shows a schematic illustration of a telecommunications system 1. The telecommunications system 1 comprises a cellular radio access network system (also indicated as E-UTRAN or (UT)RAN in FIG. 1) and a core network system containing various elements or nodes as described in further detail below.

In the telecommunications system of FIG. 1, three generations of networks are schematically depicted together for purposes of brevity. A more detailed description of the architecture and overview can be found in 3GPP Technical Specification TS 23.002 'Network Architecture' which is included in the present application by reference in its entirety.

The lower branch in FIG. 1 represents a GSM/GPRS or UMTS network.

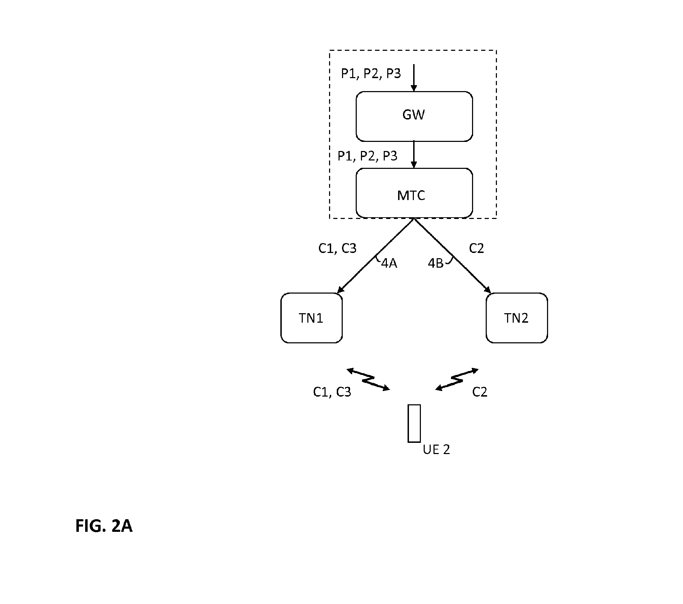

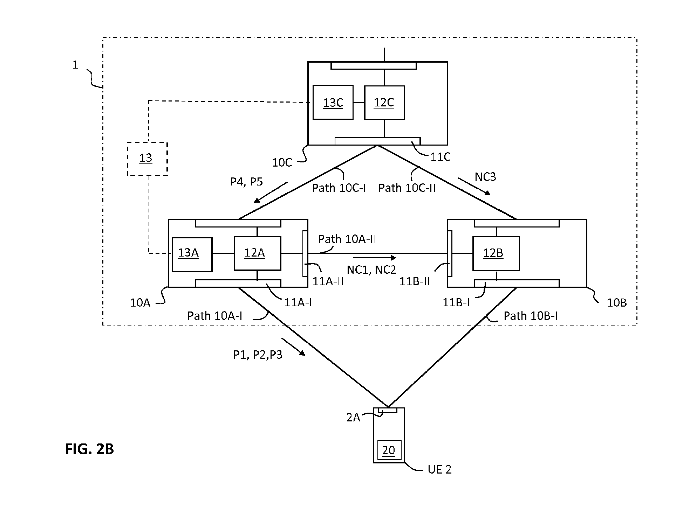

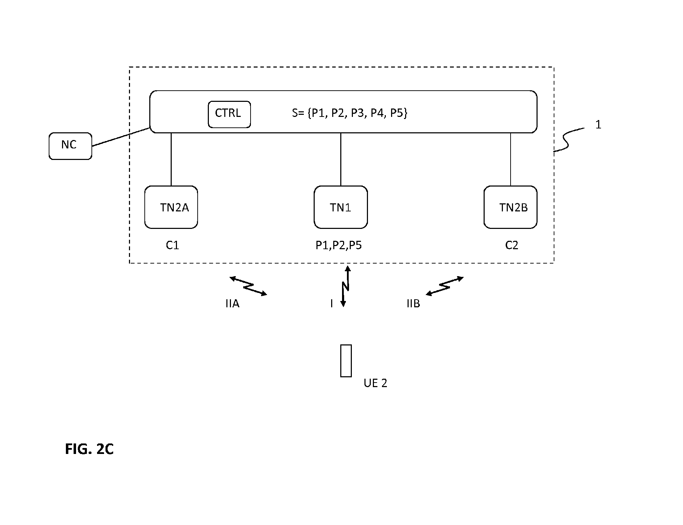

For a GSM/GPRS network, a radio access network (RAN) system comprises a plurality of nodes, including base stations (combination of a BSC and a BTS), not shown individually in FIG. 2. The core network system comprises a Gateway GPRS Support Node (GGSN), a Serving GPRS Support Node (SGSN, for GPRS) or Mobile Switching Centre (MSC, for GSM, not shown in FIG. 2) and a Home Location Register (HLR). The HLR contains subscription information for user devices 2, e.g. mobile stations MS.

For a UMTS radio access network (UTRAN), the radio access network system also comprises a Radio Network Controller (RNC) connected to a plurality of base stations (NodeBs), also not shown individually in FIG. 1. In the core network system, the GGSN and the SGSN/MSC are connected to the HLR that contains subscription information of the user devices 2, e.g. user equipment UE.

The upper branch of the telecommunications system in FIG. 1 represents a next generation network, commonly indicated as Long Term Evolution (LTE) system or Evolved Packet System (EPS).

The radio access network system, indicated as E-UTRAN, comprises base stations (evolved NodeBs, eNodeBs or eNBs), not shown individually in FIG. 1, providing cellular wireless access for a user device 2, e.g. a user equipment UE. The core network system comprises a PDN Gateway (P-GW) and a Serving Gateway (S-GW). The E-UTRAN of the EPS is connected to the S-GW via a packet network. The S-GW is connected to a Home Subscriber Server HSS and a Mobility Management Entity MME for signalling purposes. The HSS includes a subscription profile repository SPR for user devices 2.

For GPRS, UMTS and LTE systems, the core network system is generally connected to a further packet network 3, e.g. the internet.

Further information of the general architecture of a EPS network can be found in 3GPP Technical Specification TS 23.401 'GPRS enhancements for Evolved Universal Terrestrial Radio Access Network (E-UTRAN) access'.

Network coding may be applied to use resources more efficiently.

Network coding comprises making a linear combination of (at least the payload of) two or more data packets (e.g. via a bit-wise XOR operation of the two or more data packets), resulting in a network coded data packet. A single network-coded data packet thus represents a single linear combination of the two or more data packets. Note that different linear combinations, and thus different network coded data packets, may be made from a same set of two or more data packets. Also, a linear combination of the two or more data packets of a given (same) size may result in a network-coded data packet of that given size. Overhead information (e.g. overhead bits) may additionally be included to indicate or signal the linear combination made in producing the network coded data packet.

In general, a network coded packet C can be expressed as a linear combination of data packets P:

$$C_n = a_{n1}P_1 + a_{n2}P_2 + a_{n3}P_{3 + ...}$$

The numbers $a_{n1}$, $a_{n2}$, in the above expression are called coding coefficients. Preferably, at least two of the coding coefficients are non-zero.

Network coded data packets C are different if the linear combinations are different, i.e. if either the coding coefficients are different or the involved data packets P are different (or both). Preferably, the vectors of coding coefficients of two or more network coded data packets C are linearly independent. This facilitates resolving the data packets P from the network coded data packets C at e.g. a user device 2. By applying network decoding on a sufficient number of different network coded data packets C, the data packets P comprised in the linear combinations represented in the network coded data packets may be resolved.

In this disclosure, a data packet may comprise any block (e.g. an integer number of bits or bytes) of payload data. A data packet typically also has additional overhead (bits or bytes), e.g. header and/or trailer bits, for the purpose of transporting the payload data. Examples of overhead comprise an indication of the data packet and/or payload destination, of a (logical) channel, of a data packet and/or a payload length and/or an error check (e.g. CRC). A data packet in this disclosure thus comprises e.g. an Internet Protocol (IPv4, IPv6) datagram, possibly with additional overhead such as GTP overhead for tunnelling the IP packet through part of the telecommunications network (e.g. from a gateway (S-GW) to a base station (eNB)), an RLC PDU or a Transport Block as e.g. used on a wireless (radio) connection between a base station (eNB) and a user device (UE).

FIGS. 2A-2C illustrate various applications of network coding in a telecommunications network according to FIG. 1.

FIG. 2A discloses a multipoint transmission system for delivering a plurality of data packets P1, P2, P3 at a user device UE2 from a first transmission node TN1 and a second transmission node TN2 over a wireless network interface using a multipoint transmission control system MTC. The MTC is provided upstream of transmission nodes TN1 and TN2. The MTC receives data packets P1, P2, P3 from a gateway GW. The MTC may be collocated with or integrated in the gateway GW, as indicated by the dashed box. The gateway GW may e.g. comprise the S-GW of the telecommunications system 1 drawn in FIG. 1.

The MTC may itself contain network coding functionality or may outsource the network coding to another entity within or outside the telecommunications network 1.

Network coded data packets C1, C2, C3 are obtained that correspond to different linear combinations of the data packets P1, P2 and P3. Network coded data packets C1, C3 are provided to transmission node TN1 for transmission onto the wireless network interface for the user device UE2 and network coded data packet C2 is provided to the second transmission node TN2 for transmission onto the wireless network interface for the user device UE2.

Transmission nodes TN1, TN2 are provided on geographically separated locations both providing radio coverage for the user device.

By feeding, from the multipoint transmission control system MTC, the transmission nodes TN1, TN2 with network coded data packets C1, C2, C3 comprising different linear combinations of the plurality of data packets P1, P2, P3 to be delivered at the user device UE2 and providing the transmission nodes TN1, TN2 with the network coded data packets C1, C2, C3 to be transmitted to the user device UE 2 over the wireless network interface, a reduction in network traffic is obtained in the system of FIG. 2A on the first connection 4A and second connection 4B in comparison with a transmission scenario wherein the data packets P1, P2, P3 are to be transmitted to both TN1 and TN2. The linear combinations C1, C2, C3 may be arbitrary different combinations of the plurality of data packets P1, P2, P3 to be delivered at the user device UE 2 and, therefore, it is not relevant which network coded data packet C1, C2, C3 is or has been transmitted from which transmission node TN1, TN2. Consequently, transmission coordination between the transmission nodes TN1, TN2 may be omitted.

FIG. 2B is a schematic illustration of a portion of a cellar wireless telecommunications system 1 comprising a plurality of network nodes 10A-10C. In one embodiment, network nodes 10A, 10B comprise network nodes providing cellular wireless access for a UE 2 to the telecommunications system 1. Examples of such network nodes include base stations, such as NodeBs or eNBs. The network nodes 10A, 10B are configured to communicate with the UE 2 over separate radio paths, path 10A-I and path 10B-I, respectively. Network node 10C is a network node in the telecommunications system 1 upstream of the network nodes 10A, 10B providing data packets, to be delivered at the UE 2, to these network nodes 10A, 10B over (commonly, but not necessarily, wired) paths, paths 10C-I and path 10C-II, respectively. An example of such a network node 10C includes a gateway, such as an S-GW in an LTE telecommunications system (see FIG. 1). Network node 10C may receive data packets from other entities within our outside of the telecommunications system 1, e.g. from the P-GW.

Network nodes 10A and 10B are connected via a further path, path 10A-II. If network nodes 10A, 10B are eNBs, this path 10A-II is enabled by the X2 interface between eNBs.

The paths in FIG. 2B may enable bi-directional communication.

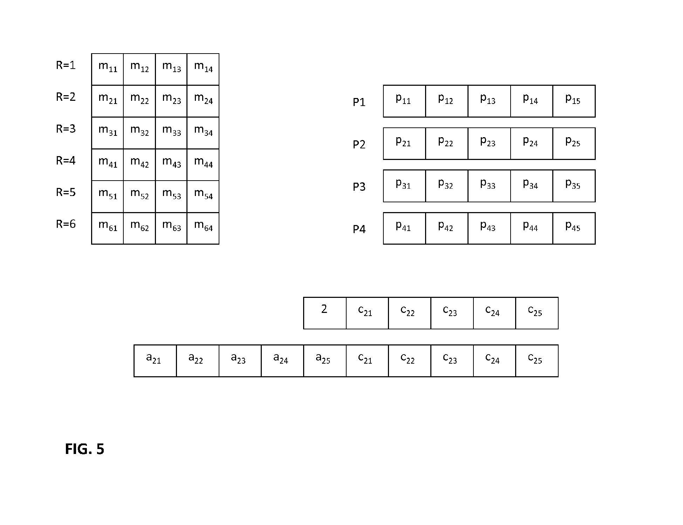

In FIG. 2B, the three network nodes 10A-10C are drawn to implement two embodiments using network coding. Network nodes 10A-10C comprise computer systems of which a more general representation is provided in FIG. 5.

Network node 10A comprises a first interface 11A-I to communicate over radio path 10A-I with the UE 2 and a second interface 11A-II to communicate data packets P1, P2, P3 over path 10A-II with network node 10B. Network node 10A receives data packets P4, P5, to be delivered at UE 2, from network node 10C over path 10C-I.

Network node 10A also comprises a control system 12A that is in communicative connection with a network coding entity 13A. Control system 12A controls operation of the network node 10A, including transmission of data packets and network coded data packets. Although network coding entity 13A is drawn integrated in network node 10A, network coding functionality may be provided externally from the network node 10A (see the dashed box 13 in FIG. 2B; note that the network coding functionality may or may not be part of the telecommunications system 1).

Network node 10B comprises a first interface 11B-I to communicate over radio path 10B-I with the UE 2 and a second interface 11B-II to communicate over path 10A-II with network node 10A. Network node 10B also comprises a control system 12B controlling e.g. transmission of network coded data packets NC1, NC2.

Network node 10C comprises an interface 11C for communicating further data packets P4, P5 and network coded data packets NC3 over paths 10C-1 and 10C-II respectively. Network node 10C is provided with a control system 12C for controlling transmission of data packets and network coded data packets. In order to obtain network coded data packets, network node 10C may be provided with a network coding entity 13C or may have outsourced the network coding functionality to an external entity 13.

The UE 2 comprises an interface 2A and a processor system 20. The interface 2A may be configured for receiving the plurality of data packets P1, P2, P3 transmitted on the first communications path 10A-I from the network node 10A and for receiving the at least one network coded data packet NC1, NC2 from the further network node 10B over the second communications path 10B-I. Note that the first communications path 10A-I and the second communications path 10B-I need not exist at the same time; e.g. first data packets P1, P2, P3 may be transmitted on the first communications path 10A-I and communication on the first communications path 10A-I may be interrupted or terminated, while at least one network coded data packet NC1, NC2 may be transmitted from the further network node 10B on the second communications path 10B-I after the second communications path 10B-I has been established.

The processor system 20 is configured for switching receiving over the receiving interface 2A on the first communications path 10A-I to subsequently receiving on the second communications path 10B-I. The processor system 20 is further configured for decoding the at least one network coded data packet NC1, NC2 received from the further network node 10B over the second communications path 10B-I using at least the first data packet P1 received from the network node 10A on the first communications path 10A-I. The interface 2A may also be configured for transmitting information back to the network node 10B indicative of whether or not and/or the number of network coded data packets needed for obtaining all data packets from the network coded data packets.

The system of FIG. 2B may be used in different implementations.

In a first implementation, a plurality of data packets P1, P2, P3 is transmitted from the network node 10A onto a first communications path 10A-I of the telecommunications network 1. Network node 10A may be a source eNB. In this implementation, the first communications path 10A-I comprises a wireless (e.g. radio) communications path between a base station (e.g. an eNB) and the user device UE 2, e.g. in the context of a handover in LTE from a source eNB to a target eNB, the path between the source eNB and the UE 2.

Next, the network node 10A obtains one or more network coded data packets from network coding of data packets P1, P2, P3. These data packets P1, P2, P3 comprise at least one data packet corresponding to the first data packet transmitted onto the first communications path 10A-I. In the embodiment of FIG. 2B, all data packets P1, P2, P3 that have been transmitted onto the first communication path 10A-I are used for obtaining the one or more network coded data packets. Other data packets P4, P5 not yet transmitted by the network node 10A onto the first communications path 10A-I may also be used for network coding to obtain the one or more network coded data packets.

Network coding may be performed by network coding entity 13A. Performing network coding on data packets P1, P2, P3 involves making a linear combination of these data packets, e.g. by a bit-wise XOR operation, of the bits of these data packets resulting in network coded data packet NC1 and NC2.

Next, the network node 10A transmits the obtained network coded data packets NC1, NC2 onto a second communications path 10A-II of the telecommunications network 1. In this implementation, the second communications path 10A-II may comprise a communications path between two base stations, e.g. in the context of a handover in LTE from a source eNB 10A to a target eNB 10B, the path being between the source eNB and the target eNB; in LTE thus crossing the X2 interface between these eNBs.

In a second implementation a plurality of data packets P4, P5 is transmitted from the network node 10C onto a first communications path 10C-I of the telecommunications network 1. Network node 10C may be a Serving Gateway S-GW. In this implementation, the first communications path 10C-I refers to a communications path between a network node in the telecommunications network upstream of a base station (e.g. an S-GW) and the base station, e.g. in the context of a handover in LTE from a source eNB to a target eNB, the path between an S-GW and the source eNB.

Next, the network node 10C obtains one or more network coded data packets from network coding of two or more data packets P4, P5. These two or more data packets P4, P5 comprise at least one data packet corresponding to the first data packet transmitted onto the first communications path 10C-I. In the embodiment of FIG. 2B, all data packets P4, P5 that have been transmitted onto the first communications path 10C-I are used for obtaining the one or more network coded data packets.

Network coding may be performed by network coding entity 13C. Performing network coding on data packets P4, P5 involves making a linear combination of these data packets by a bit-wise XOR operation of the bits of these data packets resulting in a network coded data packet NC3.

Next, the network node 10C transmits the obtained network coded data packet NC3 onto a second communications path 10C-II of the telecommunications network 1. In this embodiment, the second communications path 10C-II refers to a communications path between a network node in the telecommunications network upstream of a base station (e.g. an S-GW) and the base station, e.g. in the context of a handover in LTE from a source eNB to a target eNB, the path between an S-GW and the target eNB.

In both implementation, by transferring network coded data packets from the network node over the second communications path to a further network node, the amount of transferred data packets and/or network-coded data packets can be reduced and possibly minimised. Network coding enables avoiding unnecessarily transmitting data packets to a further network node (or further to e.g. a UE).

FIG. 2C is a schematic diagram of transmission nodes TN1, TN2A and TN2B in wireless communication with user equipment UE2. The wireless transmission nodes are part of a network 1 (which may be a combination of networks), wherein the transmission nodes TN serve to wirelessly transfer information from the network 1 to the user device UE2 in the form of data packets using a multipoint transmission method.

In the example, the information comprises a plurality of data packets P1...P5, which may form a set S={P1, P2, P3, P4, P5}.

The network 1 comprises a means for obtaining at least one network coded data packet C1, C2 corresponding to a linear combination of two or more data packets of the plurality of data packets P1...P5. Such a network coding entity NC may be located anywhere in the network 1 (e.g. in one or more transmission nodes TN, in a controller of the transmission nodes, e.g. the RNC or the S-GW or higher in the network infrastructure) or may be an external entity NC as shown in FIG. 2C.

In the embodiment of FIG. 2C, a first transmission node TN1 is configured for transmitting one or more data packets P1, P2, P5 of the plurality of data packets onto a first wireless transmission path I. Further, second transmission nodes TN2A, TN2B are configured for transmitting network coded data packets C1, resp. C2, onto second wireless transmission path IIA, resp. IIB. Since network coded data packets C1, C2 are linear combinations of the original data packets P1...P5, the user device UE2 may resolve all data packets P1...P5 from the packets data packets P1, P2 and P5 transmitted onto the first wireless transmission path I and the network coded data packets C1, C2 transmitted onto the respective second wireless transmission paths IIA, IIB.

The system provides a single wireless transmission path I over which uncoded data packets P are transmitted while network coded data packets C are transmitted over one or more further wireless transmission paths IIA, IIB. Accordingly, since any data packet P may be resolved from the network coded data packet C, no information needs to be exchanged between the transmission nodes TN providing the transmission paths on which data packets P and network coded data packets C have been transmitted. Thus, coordination requirements between the wireless transmission nodes are reduced.

In each of the examples of FIGS. 2A-2C, network coded data packets C, NC are transmitted. In order to process these network coded data packets at the receiving system (e.g. UE2 or a receiving network node), the receiving system needs to be informed of the coding coefficients of the network coded data packets.

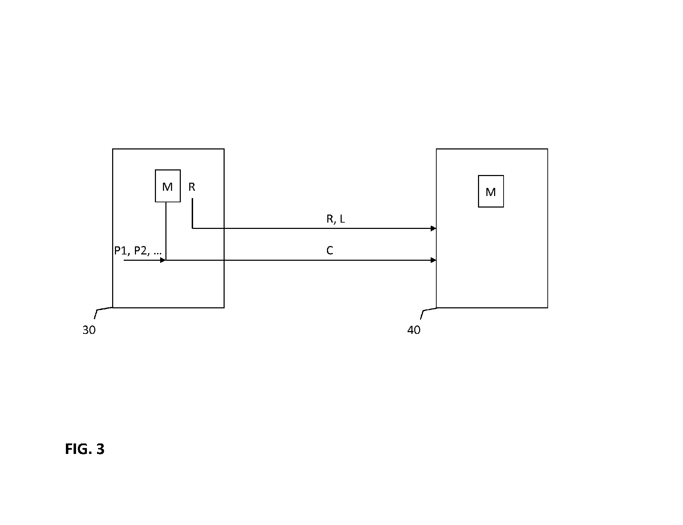

FIG. 3 is a schematic illustration of a system for signalling coding coefficients of network coded data packets in an efficient manner.

A transmission system 30 transmits a network coded data packet C that is received by receiving system 40. The transmission system 30 may be a network node, such as a wireless transmission node or a gateway. The receiving system 40 may be a network node or a user device.

The network coded data packet C is a linear combination of original data packets P1, P2,.... The coding coefficients for network coded data packet C correspond to the coding coefficient of a matrix M. The coding coefficients in the matrix M are not randomly selected, as is done in some applications. In this disclosure, the coding coefficients in the matrix M are e.g. selected such that sequences of coding coefficients are linearly independent with respect to each other. In one embodiment, the coding coefficients are selected such that this property is also valid for one or more, preferably any, sub-matrix of the matrix M. One example of such a matrix is a Cauchy matrix.

The sequences in the matrix M are arranged such that they correspond to a row (or a column) in the matrix M. The matrix indicator R, indicating a row in the matrix, may therefore indicate the sequence of coding coefficients applied for generating network coded data packet C.

The receiving system 40 is enabled to access the matrix M of coding coefficients used for generating the network coded data packet. In one embodiment, the matrix M is stored in the receiving system 40.

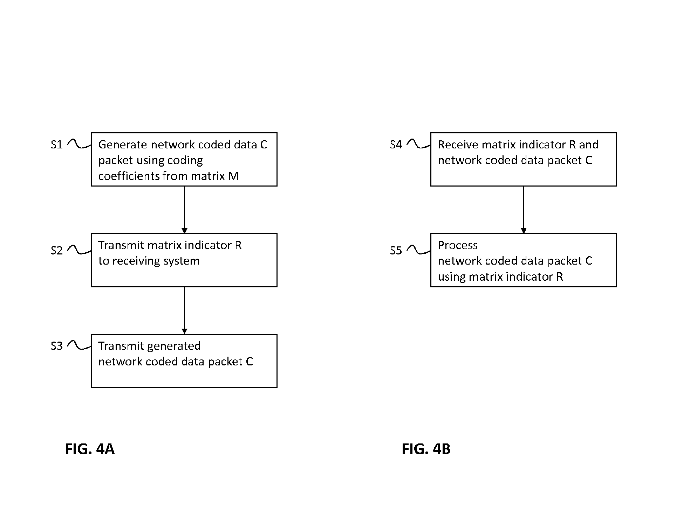

FIGS. 4A and 4B illustrate steps of an embodiment of the method in the transmission system 30 and the receiving system 40 in FIG.3, respectively.

In step S1, the transmission system 30 generates a network coded data packet C applying coding coefficients from a sequence of coding coefficients of matrix M. In step S2, a matrix indicator R that identifies the sequence of coding coefficients is signalled to the receiving system 40. In step S3, the transmission system 30 transmits the network coded data packet C. Matrix indicator R may be part of network coded data packet C.

In step S4, the receiving system 40 receives the matrix indicator R and the network coded data packet C. In step S5, the receiving system 40 applies matrix indicator R in processing network coded data packet C.

It should be noted that steps S2 and S4 may be partly omitted as far as transmission and reception of the matrix indicator R is involved. Network coding at the transmission system 30 may be performed using pre-defined sequences of coding coefficients, i.e. using coding coefficients of predefined rows in the matrix indicated by matrix indicator R. The sequence may be predefined for one particular receiving system 40. The particular receiving system 40 is aware of the applicable matrix indicator for each network coded data packet and therefore may apply the coding coefficients from the matrix without explicit signalling of the matrix indicator R for the network coded data packet.

Processing the network coded data packet C may include at least one of detecting the usefulness of the network coded data packet and the decoding of the network coded data packet. In one embodiment, a first matrix indicator $R_1$ for a first network coded data packet C1 and a second matrix indicator $R_2$ is received for a second network coded data packet C2. One of the network coded data packets C1, C2 may be discarded when it is detected from a comparison of the two matrix indicators that they are identical, i.e. the sequences of coding coefficients are identical. In other words, redundant network coded data packets can easily be detected on the basis of the matrix indicator, e.g. in a user device UE2.

Only network coded data packets formed using linearly independent sequences of coding coefficients contribute to resolving original data packets from a set of network coded data packets. In another embodiment, the processing comprises decoding of the at least one network coded data packet applying coding coefficients indicated by the received matrix indicator R. In this embodiment, the matrix indicator R is used to identify the applicable coding coefficients from the matrix M available to the receiving system 40 when decoding of the network coded data packet is performed. A single network coded data packet may be decoded in a situation as in FIG. 2C, when multiple original data packets P are available in addition to the network coded data packet C.

As mentioned above, sub-matrices of matrix M may also have the property that sequences of coding coefficients within a sub-matrix are linearly independent. The embodiment comprising one or more of such sub-matrices facilitates processing sets of network coded data packets of different size with the same matrix of coding coefficients. For example, network coded data packets may be formed for a set S of data packets {P1,...P5} to be transmitted as shown in FIG. 2C. The number of data packets involved in network coding may differ from set to set.

In one embodiment, the matrix indicator R contains a sequence length indicator L (see FIG. 3). The sequence length indicator L indicates the number of coding coefficients to be used starting from a start position in the matrix M for the matrix indicator R. For example, the matrix indicator may indicate that five coding coefficients should be used in row R, starting from the first position of the row. In this manner, portions of a larger matrix of coding coefficients can be signalled explicitly to the receiving system. The start position may be implicit, e.g. known in advance to the receiving system, such that the start position should not be signalled explicitly.

FIG. 5 illustrates a specific example of a matrix M, wherein row indicator R is used to signal the coding coefficients used in constructing network coded data packet C.

In general, it is considered that network coding is performed over a fixed set of k packets. FIG. 5 shows an example construction of a network coded data packet C.

It is assumed that all packets are available at the entity that is constructing a network-coded packet. A Cauchy matrix M with n rows and k columns is known to all entities in the network, particularly to a transmission system and a receiving system.

Rows in Cauchy matrix M provide sets of coding coefficients that are used to construct network-coded packets. In particular, the coding mechanism for constructing network coded data packet $Cj$ comprises the following steps:

a. An integer R between 1 and n is selected, i.e. we select a row in matrix $M$ (e.g. 2nd row is selected with R=2 in FIG 5).

b. Select the coding coefficients *aj1*, ..., *ajk* as the R-th row of *M*, i.e. *aji = mRi.*

c. Construct the linear combination *Cj = aj1\*P_1 + ... + ak\*Pk.*

In the remainder of this disclosure, C(R) denotes the network coded packet that is constructing from row RofM.

An advantage of the disclosed system and method is that a single number can be used to uniquely describe a coded packet. From the value of R, all coding coefficients can be easily retrieved from M. Therefore, only R needs to be signaled.

This is shown in FIG. 5. For R=2, $c_{2i}=m_{21}\*p_{1i} + m_{21}\*p_{2i} + m_{23}\*p_{3i} + m_{24}\*p_{4i}$. The novel network coded data packet is shown, wherein the applicable sequence in the matrix M is signaled by the value '2' for matrix indicator R. An old network coded data packet with randomly selected coding coefficients $a_{ji}$ is shown to illustrate the overhead reduction obtained from applying the method and system disclosed herein.

The signaling mechanism that is used to signal R can be developed/chosen independently from the coding mechanism itself.
In one embodiment, the signaling mechanism involves adding the value of R to the header of the coded packet as shown in FIG. 5. The number of bits that is needed to represent S is log2($q$), where q is the number of elements in the finite field. If $q=256$ for instance, and the symbols from the finite field correspond to bytes, the signaling overhead is one byte.

At the receiver system, receiver system may want to recover original packets P_1, ..., P_k, from a set of coded packets C(t_1 C(t_2), ..., C(t_s). If s>k, a subset of k of these coded packets can be selected, denoted by C(R_1), ..., C(R_k). In particular we attempt to find R_1, ..., R_k such that R_i≠R_j for all i≠j.

In order to recover the original packets P, it is necessary and sufficient to have such R_1, ..., R_k. First, if R_i=R_j for some i≠j, then the two network-coded packets contain the same information and the receiving system does not have enough different network-coded packets. Second, if R_i≠R_j for all i≠j, then the coding coefficients of the corresponding network-coded packets constitute a kxk sub-matrix of M. Since all sub-matrices of M are full rank, the original packets can be recovered by solving the system of linear equations in the receiving system.

As mentioned above, redundant network coded data packets can easily be detected on the basis of the matrix indicator R. A receiving system may receive r<k network-coded packets C(t_1 ..., C(t_s). Upon receiving an additional coded packet C(R) the receiver can immediately decide if this coded packet provides new information, i.e. if R=t_i for some i in between 1 and s than the packet is not useful and can be discarded. Otherwise it is guaranteed by the structure of M that it is useful.

Furthermore, from R, each set of set of k different coded packets can be used to recover the original data packets.

There are different embodiments for selecting the matrix indicator. In one embodiment, a sequence number t is kept that is initially set to 1 (or some other value). Each time a coded packet is generated, it uses R=t and the value of t is increased by one. If t=N the next value of t is chosen as 1, i.e. we restart at 1. This solution is applicable if all coded packets are generated at a single location. In another embodiment, if coded packets are generated at different locations (for instance at different base stations in case of LTE networks), the set 1...N can be partitioned into different sets that are used at these locations. In yet another embodiment, the matrix indicator R can be chosen uniformly at random. With high probability this will lead to a set of k different network coded packets. It can be used for coding at any number of locations and does not require coordination (like partitioning the set 1..N).

As mentioned above, network coding may involve sets of different number of data packets. If the number of columns in M it taken to be equal to the maximum set size, the same matrix M can be used for all set sizes. For a set size K (K<M), the first k columns of M can be used. The reason that this works is that all submatrices of M, also those that consist of less than k columns, are full rank. In an even more dynamic setting, network coding can be started over the first L original packets of a K size window (L<K). In that case, not only the matrix indicator R should be signaled, but also the number of packets (L) that is used.

At the receiving side, decoding as described above can be performed more efficiently than with random linear network coding. The inverse of a Cauchy matrix can be explicitly written in terms of its parameters. Therefore, solving the system of equations (i.e. resolving the data packets from the network coded data packets) is computationally favorable.

All entities involved in coding and decoding are aware of the finite field F over which is coded as well as the matrix M. The number of elements in the finite field, denoted by q, should be at least n+k, which is the number of distinct elements in the matrix M. Recall that M is defined in terms of the variables x1, ..., xn and y1, ..., yk. The maximum number of original packets that can be coded together is k. The number of different coded packets that can be generated is n. In order to maximize this number one should let n=q-k. Regarding the entries of matrix M, any Cauchy matrix is useful. However, if more structure is enforced on matrix M, the entries of M can be very easily generated on the fly and the matrix M does not need to be stored completely. For instance, if x1=1, x2=2, ..., xn=n, y1=n+1, ..., yk=n+k. A single field size and one matrix M can be used for all applications. If, for instance, q=256, k=55 and n=200, a set size up to 55 packets and a sufficiently large number of coded packets (200) can be generated. The size of q=256 is chosen such that operations are over bytes leading to simplifications in implementation. The values of k and n were chosen arbitrarily.

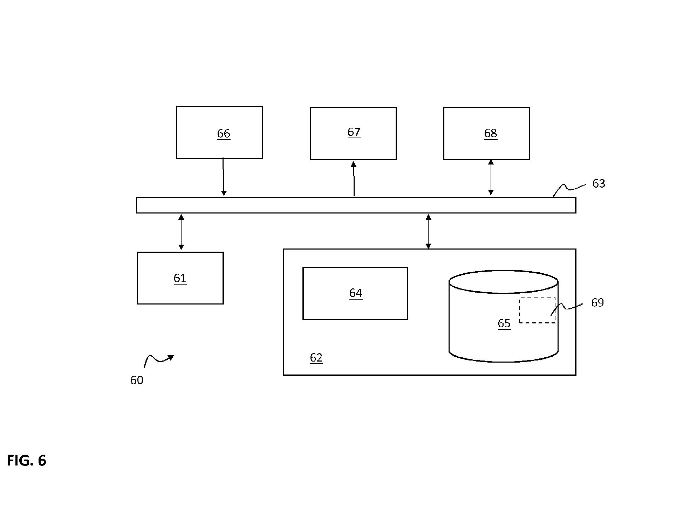

FIG. 6 is a block diagram illustrating an exemplary data processing system that may be used as a part of a user equipment 2 or of a network node, such as transmission node TN1, TN2, etc., or any other element of a telecommunications network 1 as disclosed in FIG. 1.

Data processing system 60 may include at least one processor 61 coupled to memory elements 62 through a system bus 63. As such, the data processing system 60 may store program code within memory elements 62. Further, processor 61 may execute the program code accessed from memory elements 62 via system bus 63. In one aspect, data processing system 60 may be implemented as a computer that is suitable for storing and/or executing program code. It should be appreciated, however, that data processing system 60 may be implemented in the form of any system including a processor and memory that is capable of performing the functions described within this specification.

Memory elements 62 may include one or more physical memory devices such as, for example, local memory 64 and one or more bulk storage devices 65. Local memory may refer to random access memory or other non-persistent memory device(s) generally used during actual execution of the program code. A bulk storage device 65 may be implemented as a hard drive or other persistent data storage device. The data processing system 60 may also include one or more cache memories (not shown) that provide temporary storage of at least some program code in order to reduce the number of times program code must be retrieved from bulk storage device 65 during execution.

Input/output (I/O) devices depicted as input device 66 and output device 67 optionally can be coupled to the data processing system 60. Examples of input devices may include, but are not limited to, for example, a keyboard, a pointing device such as a mouse, a touchscreen, or the like. Examples of output device may include, but are not limited to, for example, a monitor or display, speakers, or the like. Input device 66 and/or output device 67 may be coupled to data processing system 60 either directly or through intervening I/O controllers. A network adapter 68 may also be coupled to data processing system 60 to enable it to become coupled to other systems, computer systems, remote network devices, and/or remote storage devices through intervening private or public networks. The network adapter 68 may comprise a data receiver for receiving data that is transmitted by said systems, devices and/or networks to said data processing system 60 and a data transmitter for transmitting data to said systems, devices and/or networks. Modems, cable modems, and Ethernet cards are examples of different types of network adapters that may be used with data processing system 60.

As pictured in FIG. 6, memory elements 62 may store an application 69. It should be appreciated that data processing system 60 may further execute an operating system (not shown) that can facilitate execution of the application. Applications, being implemented in the form of executable program code, can be executed by data processing system 60, e.g., by processor 61. Responsive to executing the application 69, the data processing system 60 may be configured to perform one or more operation as disclosed in the present application in further detail.

In one aspect, for example, data processing system 60 may represent a network node in a telecommunications network or or a user device UE 2. In that case, application 29 may represent a client application that, when executed, configures data processing system 60 to perform the various functions described herein respect to processing network coded data packets wherein the signalling of the coding coefficients is performed using a matrix indicator R. Examples of a network node include a base station of a telecommunications network 1 providing cellular wireless access, e.g. a NodeB or an eNB. The user equipment can include, but is not limited to, a personal computer, a portable computer, a mobile phone, or the like.

In another aspect, data processing system 60 may represent a transmission node TN as described herein, in which case application 69, when executed, may configure data processing system 60 to perform operations as described in the present disclosure.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

**Claims**

1. A method for processing one or more network coded data packets in a receiving system,
   wherein the receiving system has access to a matrix comprising linearly independent sequences of coding coefficients applicable to the one or more network coded data packets, the method in the receiving system comprising:

   - applying a matrix indicator of the matrix, the matrix indicator indicating the applicable sequence of coding coefficients in the matrix for processing a network coded data packet; and
   - processing the network coded data packet in accordance with the applicable matrix indicator.

2. The method according to claim 1, comprising the step of receiving the matrix indicator over a communication link.

3. The method according to claim 1 or 2, comprising:

   - receiving a first matrix indicator for a first network coded data packet;

   - receiving a second matrix indicator for a second network coded data packet;
   - wherein the processing comprises discarding the first network coded data packet or the second network coded data packet when the first matrix indicator and the second matrix indicator are identical.

4. The method according to one or more of the preceding claims, wherein the processing comprises decoding of the at least one network coded data packet applying coding coefficients indicated by the received matrix indicator.

5. The method according to one or more of the preceding claims, wherein the matrix indicator is included in the network coded data packet received by the receiving system.

6. The method according to one or more of the preceding claims, wherein the matrix comprises one or more sub-matrices of coding coefficients having linearly independent sequences of coding coefficients, e.g. a Cauchy matrix.

7. The method according to one or more of the preceding claims, wherein the matrix indicator contains a sequence length indicator.

8. The method according to one or more of the preceding claims, wherein the receiving system comprises at least one of a user device (e.g. a smart phone; a tablet computer), a wireless access node (e.g. a base station) and a gateway.

9. A method for signalling coding coefficients of a network coded data packet from a transmission system to a receiving system over a communication link, wherein the coding coefficients have been selected from a matrix comprising linearly independent sequences of coding coefficients, the method comprising transmitting a matrix indicator of the matrix over the communication link, the indicator indicating the applicable sequence of coding coefficients in the matrix for processing the network coded data packet in the receiving system.

10. The method according to claim 9, further comprising the step of generating a network coded data packet using coding coefficients of a sequence of coding coefficients from the matrix.

11. The method according to claim 9 or 10, wherein the matrix indicator is included in the network coded data packet.

12. The method according to one or more of the preceding claims 9-11, wherein the matrix comprises sub-matrices of coding coefficients having linearly independent sequences of coding coefficients, e.g. a Cauchy matrix.

13. The method according to one or more of the preceding claims 9-12, wherein the matrix indicator contains a sequence length indicator.

14. The method according to one or more of the preceding claims 9-13, wherein the transmission system comprises at least one of a wireless access node, a network coding entity and a gateway.

15. A computer program or suite of computer programs comprising at least one software code portion or a computer program product storing at least one software code portion, the software code portion, when run on a computer system, being configured for executing the method according to one or more of the claims 1-14

16. A receiving system comprising a processor configured for executing the method according to one or more of the claims 1-8.

17. A transmission system comprising a processor configured for executing the method according to one or more of the claims 9-14.

FIG. 1

P1, P2, P3 →

GW

P1, P2, P3 ↓

MTC

C1, C3

4A

C2

4B

TN1

TN2

C1, C3

C2

UE 2

**FIG. 2A**

**FIG. 2B**

**CTRL**    S= {P1, P2, P3, P4, P5}

NC

1

TN2A    TN1    TN2B

C1    P1,P2,P5    C2

IIA    I    IIB

UE 2

**FIG. 2C**

**FIG. 3**

S1 — Generate network coded data C packet using coding coefficients from matrix M

↓

S2 — Transmit matrix indicator R to receiving system

↓

S3 — Transmit generated network coded data packet C

**FIG. 4A**

S4 — Receive matrix indicator R and network coded data packet C

↓

S5 — Process network coded data packet C using matrix indicator R

**FIG. 4B**

| R=1 | $m_{11}$ | $m_{12}$ | $m_{13}$ | $m_{14}$ |
|-----|------|------|------|------|
| R=2 | $m_{21}$ | $m_{22}$ | $m_{23}$ | $m_{24}$ |
| R=3 | $m_{31}$ | $m_{32}$ | $m_{33}$ | $m_{34}$ |
| R=4 | $m_{41}$ | $m_{42}$ | $m_{43}$ | $m_{44}$ |
| R=5 | $m_{51}$ | $m_{52}$ | $m_{53}$ | $m_{54}$ |
| R=6 | $m_{61}$ | $m_{62}$ | $m_{63}$ | $m_{64}$ |

| | | | | | |
|-----|------|------|------|------|------|
| P1 | $p_{11}$ | $p_{12}$ | $p_{13}$ | $p_{14}$ | $p_{15}$ |
| P2 | $p_{21}$ | $p_{22}$ | $p_{23}$ | $p_{24}$ | $p_{25}$ |
| P3 | $p_{31}$ | $p_{32}$ | $p_{33}$ | $p_{34}$ | $p_{35}$ |
| P4 | $p_{41}$ | $p_{42}$ | $p_{43}$ | $p_{44}$ | $p_{45}$ |

| 2 | $c_{21}$ | $c_{22}$ | $c_{23}$ | $c_{24}$ | $c_{25}$ |
|---|------|------|------|------|------|

| $a_{21}$ | $a_{22}$ | $a_{23}$ | $a_{24}$ | $a_{25}$ | $c_{21}$ | $c_{22}$ | $c_{23}$ | $c_{24}$ | $c_{25}$ |
|------|------|------|------|------|------|------|------|------|------|

**FIG. 5**

**FIG. 6**

Europäisches
Patentamt

European
Patent Office

Office européen
des brevets

**EUROPEAN SEARCH REPORT**

Application Number

EP 14 19 9131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/041041 A1 (KIM YONG HO [KR] KIM YONG-HO [KR]) 17 February 2011 (2011-02-17) * paragraphs [0043] - [0046]; figures 1,2 * <br> * paragraphs [0080] - [0097] * ----- | 1-17 | INV. H04L1/00 |
| A | US 2010/260189 A1 (ANSARI NIRWAN [US] ET AL) 14 October 2010 (2010-10-14) * paragraphs [0018] - [0023]; figures 1,2 * <br> * paragraphs [0071] - [0087]; figure 7 * ----- | 1-17 | |
| A | LACAN; FIMES: "A Construction of Matrices with No Singular Square Submatrices", 21 February 2004 (2004-02-21), FINITE FIELDS AND APPLICATIONS; [LECTURE NOTES IN COMPUTER SCIENCE;;LNCS], SPRINGER-VERLAG, BERLIN/HEIDELBERG, PAGE(S) 145 - 147, XP019003306, ISBN: 978-3-540-21324-6 * the whole document * ----- | 6,12 | |

| | |
|---|---|
| | TECHNICAL FIELDS SEARCHED (IPC) |
| | H04L |

The present search report has been drawn up for all claims

| Place of search | Date of completion of the search | Examiner |
|---|---|---|
| Munich | 11 June 2015 | Kreppel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 9131

11-06-2015

| Patent document cited in search report | Publication date | Patent family member(s) | Publication date |
|---|---|---|---|
| US 2011041041 A1 | 17-02-2011 | US 2011041041 A1 <br> WO 2010005181 A2 | 17-02-2011 <br> 14-01-2010 |
| US 2010260189 A1 | 14-10-2010 | NONE | |

EPO FORM P0459

**EP 3 035 576 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LACAN ; FIMES.** A Construction of Matrices With No Singular Square Submatrices. *Lecture Notes in Computer Science,* 2004, vol. 2948, 145-147